# EUROPEAN PATENT SPECIFICATION

(11) **EP 3 413 186 B1**
(45) Date of publication and mention of the grant of the patent: **25.03.2020**
(21) Application number: 18175700.6
(22) Date of filing: 04.06.2018
(51) Int. Cl.: G06F 3/12

(54) **MEDIA PROCESSING SYSTEM COMPRISING A PRINT ENGINE HAVING A MAXIMUM PRINT SPEED AND A METHOD THEREFOR**
MEDIENVERARBEITUNGSSYSTEM MIT EINEM DRUCKWERK MIT MAXIMALER DRUCKGESCHWINDIGKEIT UND VERFAHREN DAFÜR
SYSTÈME DE TRAITEMENT MULTIMÉDIA COMPRENANT UN MOTEUR D'IMPRESSION PRÉSENTANT UNE VITESSE D'IMPRESSION MAXIMALE ET PROCÉDÉ ASSOCIÉ

(30) Priority: 07.06.2017 EP 17174813
(43) Date of publication of application: 12.12.2018
(73) Proprietor: Canon Production Printing Holding B.V., 5914 CA Venlo (NL)
(72) Inventor: GERRITS, Antonius M., 5914 CA Venlo (NL); KLOMP, Edy I.H.C., 5914 CA Venlo (NL); WIERDA, Klaas J., 5914 CA Venlo (NL); CALUGAR, Camelia, 5914 CA Venlo (NL); RIJBROEK, Dennis H.L., 5914 CA Venlo (NL); VERDUIN, Pieter, 5914 CA Venlo (NL); KESSELS, Gerardus G.J.C., 5914 CA Venlo (NL)
(74) Representative: Canon Production Printing IP Department

(56) References cited:
- EP-A2- 0 891 863
- JP-A- 2016 031 602
- US-A1- 2004 161 275

## Description

### TECHNICAL FIELD OF THE PRESENT INVENTION

The present invention relates to a media processing system comprising a print engine having a maximum print speed, a print job queue of print jobs to be processed according to specified print job settings per print job and according to a print order determined by the print job queue, a print controller to control the processing of the print jobs, and a user interface screen.

### BACKGROUND OF THE PRESENT INVENTION

Nowadays a user interface screen for a media processing system may show information to help a user getting better insight in the productivity of the media processing system. Currently information for a production of the media processing system typically indicates what print speed for processing the print jobs was realised with respect to the maximum print speed of the media processing system. A maximum print speed or a print speed in general is expressed in a number of sheets of a certain size per minute, for example 60 A4 sheets per minute.
The present invention disregards effects of paper jams, manual holds and printer switch offs on the print speed of the media processing system.
JP 2016 031602 describes a method to provide a more nearly optimal press speed by analysing the past printing track record.
US 2004/161275 describes a method for knowing a processing speed on each stage in the printing process.

It is an object of the present invention to enable a possible improvement with respect to the realised print speed for processing the print jobs in the print job queue of the media processing system.

### SUMMARY OF THE PRESENT INVENTION

In order to achieve this object, according to the present invention, the print controller is configured to determine, according to an original set of the specified print job settings and according to the print order determined by the print job queue, an achievable average print speed of the media processing system for printing the print jobs in the print queue, the achievable average print speed being lower than the maximum print speed due to the original set of the specified print job settings and to the print order, to establish a realised average print speed of the media processing system of printing the print jobs in the print queue, and to notify a user of the media processing system by simultaneously displaying on the user interface screen a value of the realised average print speed established in the establishing step and a value of the achievable average print speed determined in the determining step.

According to an example the realised average print speed is established after printing of the print jobs in the print queue. In the case that the user establishes that the realised average print speed after printing the print jobs in the print queue is lower than the achievable average print speed, the user may apply a remedy to improve the realised average print speed for an equal or similar set of print jobs in the future.

According to the invention the print controller is configured to execute the step of establishing the realised average print speed and the step of notifying the user concurrently with a step of printing the print jobs in the print queue by the print engine. The realised average print speed may be established from the start of printing of the print job in the print queue. As soon as printing is started the actual realised average print speed can be calculated and displayed together with the forecasted achievable average print speed. Depending on the print job characteristics of the print jobs the actual realised average print speed may vary and may be higher or lower than the forecasted achievable average print speed. If the printing is not interrupted for some reason, e.g. out of media, paper jam, etc., towards the end of the printing of the print jobs the realised average print speed will become equal to the forecasted achievable average print speed if the forecast is correct. By doing so, the user immediately gets an indication as soon as printing of the print jobs is started that the realised average print speed could be higher if for example print job settings are changed or a print order is changed.
Depending on the print job settings of the print jobs in the print job queue, the realised average print speed may be faster than or slower than an achievable print speed of the print engine. For example, thick or mixed media may be processed at a lower print speed than with normal media. For example, printing in black and white may be faster than printing in colour, printing using certain finishing or a certain print mode may take longer than normal printing. Complex pages in a document may lead to a lower rasterizing speed resulting in a lower realised average print speed Such a situation tells a user that the media processing system has actually been running below the maximum print speed, whereas, given the media, print mode or media size, the media processing may have been running at the achievable average print speed. For example, when the media processing system runs an entire day on coated paper that runs on 60 % of the maximum print speed, then the user interface screen could indicate that the realised average print speed is 60 % of the maximum print speed. A user would be inclined to try to improve the realised average print speed to much higher. But his efforts will be in vain because, unless he decides to change to normal paper, the realised average print speed of a full day of printing on coated media will not exceed 60 %.

The present invention will allow that the realised average print speed is referenced against the determined achievable average print speed that could be expected based on or according to the print job settings and based on or according to the print order of the print jobs in the print job queue. At determining the achievable average print speed, effects of the print job settings and/or the print order are weighed against a printing and finishing duration of the print jobs when printed according to the print job settings and the print order.

By doing so, the user gets insight to what extent the realised average print speed does not match the determined achievable average print speed. For example, a realised average print speed may be 60 prints per minute, a determined achievable average print speed may be 70 prints per minute, while a maximum print speed may be 100 prints per minute. Now the user is aware that the productivity can be improved by 1/6 part, i.e. 16.7 %. The user may be an end user of the media processing system, an operator of the media processing system or a floor manager of the media operating system.
According to an embodiment the print controller is configured to set at least one finite time interval during which the realised average print speed is established and for which the achievable average print speed is determined and the controller is configured to display on the user interface screen for each set finite time interval a value of the established realised average print speed and a value of the determined achievable print speed.

By doing so, a quantity of time for printing the print jobs in the print queue may be divided into smaller parts which can be analysed one by one. A finite time interval may be for example set to the duration of a print job. Preferably, the displayed value of the established realised average print speed is a current value of the realised average print speed. In other words, the actual realised average print speed is displayed.

According to the invention the controller is configured to accept a threshold print speed value being intended to be compared by the controller with the value of the realised print speed and the user interface screen is configured to display a digital representation of an outcome of the comparison near the displayed value of the realised average print speed on the user interface screen.
For example, the user can set a threshold print speed value in order to get a trigger if the realised average print speed of the number of print jobs during a time period of for example a day, is lower than the threshold print speed. The threshold print speed may be higher or lower than the achievable average print speed. For example, if a user has a target to let the print engine run at an average speed of e.g. at least 80 % of the maximum print speed, he knows as soon as printing is started if his target will be met or not, and if not, he can think about what could be done to improve productivity.

According to the invention the user interface screen is configured to display, when the value of the realised average print speed is lower than the threshold print speed value, a digital suggestion item how to improve the realized average print speed for the print jobs.
According to an embodiment the digital suggestion item is according to at least one other set of print job settings, each other set of the at least one other set of print job settings being deviating from the original set and from each other and influencing the average print speed of the media processing system upon printing of the print jobs in the print queue according to the other set. For example, a suggestion may be "use more uncoated media", "do finishing off-line", "change order of print jobs", etc. According to another embodiment the print controller automatically improves the realized average print speed for the next print jobs, by automatically applying the suggestion. For example, the print controller may automatically switch off finishing in jobs and optionally generate a trigger that finishing still must be done off-line.
According to an embodiment the user interface screen is configured to display a digital representation of the at least one other set of print job settings.
According to an embodiment the digital suggestion item is according to a specific print order being other than the print order of the print jobs in the print job queue and influencing the average print speed of the media processing system upon printing of the print jobs in the print queue according to the specific order.
According to an embodiment the user interface screen is configured to display a digital representation of the specific print order.

According to the invention the user interface screen is configured to display near the digital suggestion item a user operable item which upon activation results in the controller to carry out the suggestion.

The present invention also relates to a method according to claim 7.

According to an embodiment the method comprises the steps of setting at least one finite time interval during which the realised average print speed is established and for which the achievable average print speed is determined and displaying on the user interface screen for each set finite time interval a value of the established realised average print speed and a value of the determined achievable print speed.

The present invention also relates to a non-transitory software product comprising program code on a computer-readable medium, wherein said program code, when loaded into a computer that is connected to a media processing system causes the computer to perform the method according to the invention.

### BRIEF DESCRIPTION OF THE DRAWINGS

Preferred embodiments will now be described in conjunction with the drawings, wherein:
- FIG. 1: is a schematic view of the media processing system according to the present invention;
- FIG. 2: is a schematic view of user interface screen showing a print job queue of the media processing system according to the present invention;
- FIG. 3: is a schematic view of a user interface screen showing print speeds and ratios of print speeds according to the invention;
- FIG. 4: is a schematic view of a user interface screen showing print speeds and ratios of print speeds including a threshold print speed according to the invention;
- FIG. 5: is a schematic view of a user interface screen showing a notification for improving the realised average print speed according to the present invention;
- FIG. 6: is a flow diagram of an embodiment of the method according to the present invention; and
- FIG. 7: is a flow diagram of another embodiment of the method according to the present invention.

### DETAILED DESCRIPTION OF THE PREFERRED EMBODIMENTS

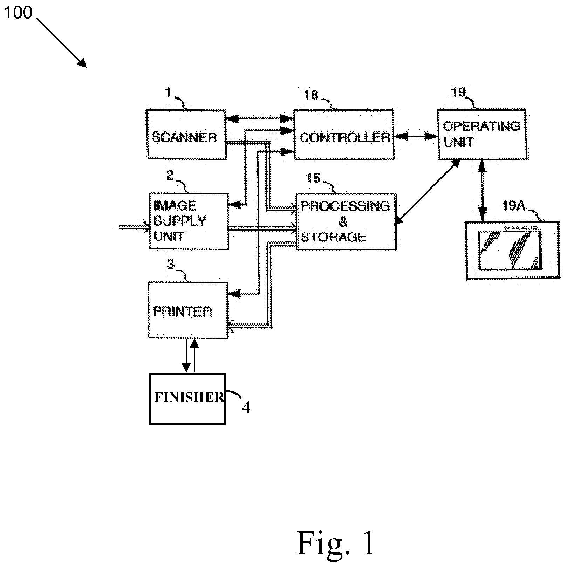

Fig. 1 shows the general arrangement of a media processing system 100 according to the invention. The media processing system 100 comprises a scanner 1 for opto-electrical scanning of a document and delivering digital image information corresponding thereto, an image supply unit 2 for feeding image information from an external source to the print system and a printer, i.e. print engine 3 for printing digital image information on the receiving material. The print engine 3 has a maximum print speed, for example 60 A4 sheets per minute. The image supply unit 2 is configured to receive a print job with a print job ticket comprising a plurality of print job settings. Both the scanner 1 and the image supply unit 2 are connected to a processing and storage device 15 for processing and intermediate storage of image information. The processing and storage device 15 is in turn connected to the print engine 3. The scanner 1, image supply unit 2, the processing and storage device 15 and print engine 3 are connected to a controller 18, which is also connected to an operating unit 19. The operating unit 19 is provided with a user control panel 19A with operator control elements and a display element, for example an LCD screen in the form of a touch screen for use by a user at the media processing system 100. The user control panel 19A may be remotely wireless connected to the media processing system 100. The controller 18 comprises a print job queue for ordering the print jobs which are submitted to the media processing system 100 via the image supply unit 2. Print jobs may also originate from the scanner 1. The operating unit 19 gathers information from the controller 18 and the processing and storage device 15 in order to display the gathered information at the user control panel 19A. The controller 18 comprises storage for a plurality of media processing system settings. The media processing system settings determine a pre-printing process like a ripping process of a print job, a print process by the print engine 3, and a post-printing process like an inline finishing step. The media processing system 100 may also comprise a finisher 4 for finishing printed receiving material like stapling, punching, book-binding, laminating, etc. In Fig.1 the finisher has a two-directional communication with the print engine 3. However, a finisher having a one-directional communication with the print engine 3 or an offline finisher having no communication with the print engine 3 may be envisioned.

An additional digital management system may be connected to the media processing system 100 to deliver information from other media processing systems to the controller 18.

The controller 18 is arranged to receive commands from the local user interface 19A, from the scanner 1, or from remote user interfaces via the network and to control all operations of the image supply unit 2, the print engine 3 and the finisher 4. Further, the controller 18 controls the user interface 19A for displaying messages and other information on a display of the user interface.

The finisher 4 may be a device provided by the manufacturer of the controller 18. In that case, detailed information on the properties and capabilities of the finisher or finishers will be available in the controller 18. As an alternative, the finisher 4 may be an OEM finisher from another manufacturer which communicates with the controller 18 according to a standard DFD (Document Finishing Device) protocol. In that case, only limited information on the properties of the finisher may be available in the controller 18. At least, however, the controller receives a signal when a finishing process for a document or a set of documents has been completed.

When one or more print jobs are received at a print job receiving section being a specific module in the controller 18, a scheduler being another specific module in the controller 18 sorts the received jobs by their priorities and arranges them in a print queue which determines the sequence in which the jobs are to be processed. Further, based on more or less detailed information on the processing operations to be performed in the print engine 3 and the finisher 4, the scheduler calculates for each job a first estimate of a start time and an end time of each print job, and thus a print job duration of each print job. Based on this estimate, the scheduler calculates a time schedule which will be displayed on the user interface 19A (and possibly also on remote user interfaces).

According to the present invention the controller 18 determines, according to an original set of the specified print job settings and according to the print order determined by the print job queue, an achievable average print speed of the media processing system 100 for printing the print jobs in the print queue. The achievable average print speed may be lower than the maximum print speed due to the original set of the specified print job settings and due to the print order.
After the print jobs in the print queue have been printed, the controller 18 establishes a realised average print speed of the media processing system 100 of printing the print jobs in the print queue. The controller 18 will notify a user of the media processing system 100 by displaying on the user control panel 19A a value of the established realised average print speed and a value of the determined achievable average print speed.

The user control panel 19A is also suitable for displaying user interface windows for controlling the print job queue residing in the controller 18. The user control panel 19A may be used to submit print jobs to the print engine 3. According to another embodiment a computer in a network has a user interface for displaying and controlling the print job queue of the media processing system 100. Another computer in the network may be used as print job submission device according to the invention. On this computer relevant software like a printer driver for the media processing system 100 may be installed. The computer may also be configured as a job submission device according to the invention for the media processing system 100. According to the present invention the user control panel 19A is used as a dashboard for notifying the user with respect to the maximum print speed, the realised average print speed, the determined achievable average print speed, and calculated ratios between said print speeds. The dashboard is a visual display of important information needed to achieve the objective of a more efficient use of the media processing system. Information on the dashboard is so arranged that the information can be monitored at a glance. The information of the dashboard may also be implemented as a network connected remote user interface which can be connected to the controller 18, but also to a central web server.

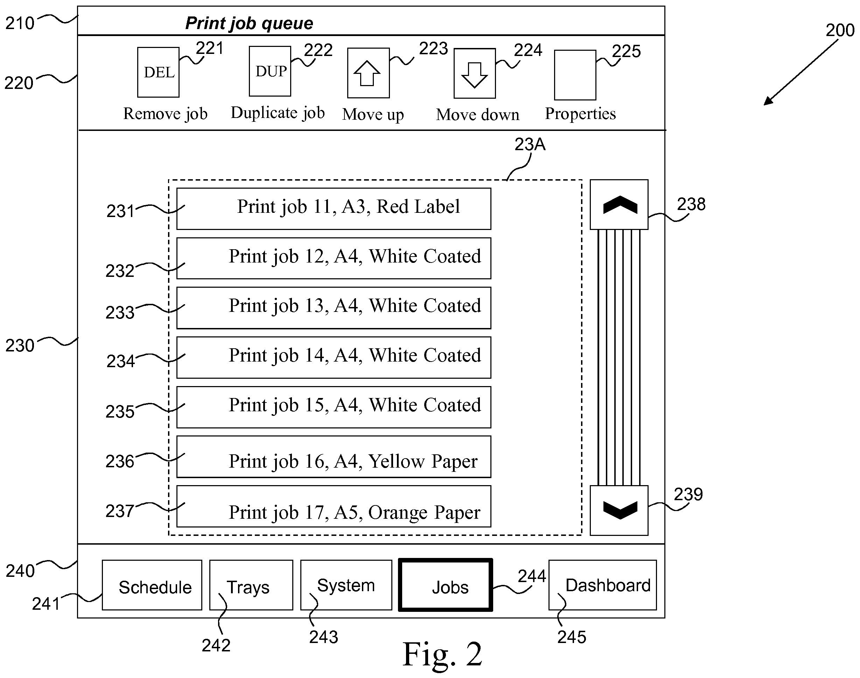

FIG. 2 is a schematic view of user interface window 200 showing a print job queue of the media processing system according to the present invention.
In an alternative embodiment part of the functionality - like buttons - of this user interface window is designed as hardware buttons near the user interface window 200. The user interface window 200 is opened at the user control panel 19A in FIG. 1 and shows a representation of the print job queue residing in the controller 18 in FIG. 1.

The user interface window 200 comprises a title section 210, a user action section 220, a print job queue section 230 and a navigation section 240.

The user action section 220 comprises user operable items 221 - 225 to be selected for executing actions on one or more selected print jobs in the print job queue 23A in the print job queue section 230.
A first user operable item 221 represents a job removal action.
A second user operable item 222 represents a job duplication action.
A third user operable item 223 represents a move up action.
A fourth user operable item 224 represents a move down action.
A fifth user operable item 225 represents an action to retrieve and display properties and settings of a selected print job in a properties window (not shown).

The navigation section 240 comprises a first user operable item 241 for navigating to a schedule with a timeline and media needed for the print jobs, a second user operable item 242 for navigating to an overview of the input trays and the content of the input trays, a third user operable item 243 for navigating to the system settings, a fourth user operable item 244 for navigating to the print jobs in the print job queue 23A and a fifth user operable item 245 for navigating to a dashboard. In the user interface window 200 the fourth user operable item 244 is selected.

The print job queue section 230 comprises a representation of the print job queue 23A. The print job queue 23A may be empty or comprises at least one print job. The print job queue 23A comprises print jobs to be processed according to specified print job settings per print job and according to a print order determined by the print job queue 23A. FIG. 2 shows a plurality of print jobs 231 - 237 in the print job queue 23A in a sequence order from top to bottom. A first print job 231 will be printed real soon after the current print job (not shown) that is currently printed by the printing device is ready. A last print job 237 will be printed if the preceding print jobs 231 - 236 are ready. Each print job 231 - 237 in the print job queue 23A is selectable by a mouse or by a finger or stylus in case of a touch screen.
A sequence order of the print jobs 231 - 237 in the print job queue 23A may be changed by selecting a print job in the print job queue 23A and then activating the third user operable item 223 or the fourth user operable item 224 in order to move the selected print job one position up or down respectively in the print job queue 23A. In a further embodiment in case of a touch screen a position of a print job 231 - 237 in the print job queue 23A may be changed by dragging and dropping the appropriate print job to another position in the print job queue.
The print job queue 23A is scrollable by activating an upward scrolling button 238 or a downward scrolling button 239. Each print job 231 - 237 in the print job queue 23A may be displayed with a number of properties of the print job, such as an identifying name of the print job ("Print job 1"), a size of the image receiving material to be used for the print job ("A3"), the medium type of the image receiving material ("Red Label", "White Coated"), etc. For convenience reasons a small relevant number of properties for each print job 231 - 237 is displayed in the print job queue 23A. One of the properties for a print job may be the estimated print speed for the print job.

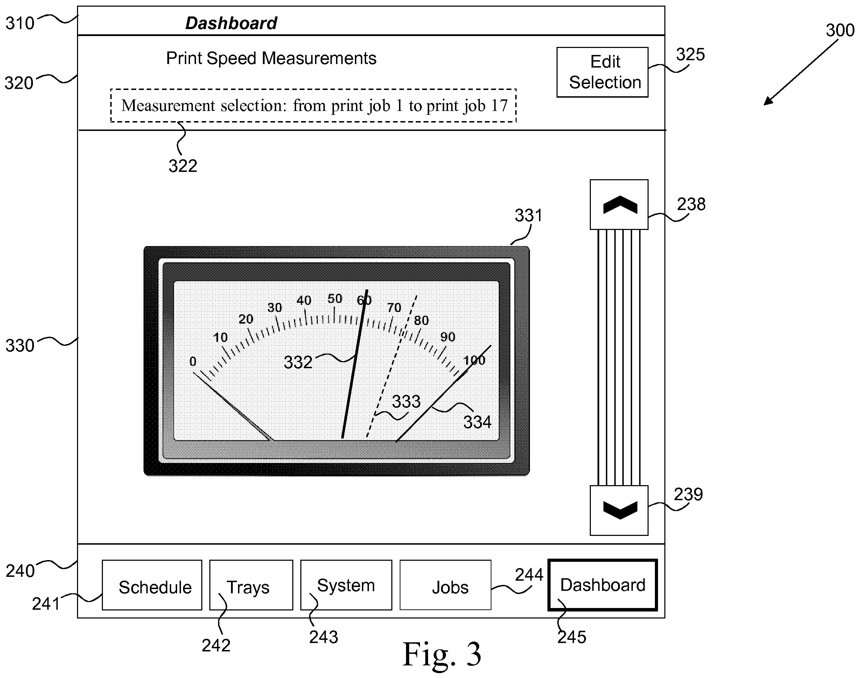

FIG. 3 is a schematic view of a user interface window 300 showing a dashboard section 330 for the media processing system. The dashboard section 330 is a visual display of important information needed to achieve the objective of a more efficient use of the media processing system. The dashboard section 330 is arranged on the user interface window 300 so that the information can be monitored at a glance. The user interface window 300 appears when the fifth user operable item 245 is selected in the navigation section 240.

The user interface window 300 comprises a title section 310 ("Dashboard"), a user filter section 320, the dashboard section 330 and the navigation section 240.

The user filter section 320 comprises a user operable item 325 to be selected for editing and displaying a filter on the group of print jobs to be taken into account for the information on the dashboard section 330. When a filter is selected, the selected filter is displayed in a text bar 322. For example - as shown in Fig. 3 - for the measurement selection in the dashboard section 330 print job 1 to print job 17 have been selected.

The filter to be selected by means of the user operable item 325 may be a selection of a number of print jobs last executed, a number of jobs in a certain time period, jobs with specific media, mixed size jobs, mixed media jobs, slowest job, fastest job, etc. When the filter is changed by the user, the information shown in the dashboard section 330 will automatically be recalculated and adapted accordingly. According to an embodiment at least one finite time interval is set in the user filter section 320. For each print job selected by the filter a finite time interval may be set, for example the print job duration of the print job. The realised average print speed is established during, preferably from the start of, the at least one set finite time interval. The achievable average print speed is determined for the at least one set finite time interval. The dashboard section 330 is configured to display for the at least one set finite time interval a value - preferably a current value - of the established realised average print speed and a value of the determined achievable print speed.
The navigation section 240 in Fig. 3 resembles the navigation section 240 in Fig. 2. In the user interface window 300 the fifth user operable item 245 ("Dashboard") is selected.
The dashboard section 330 comprises information about print speeds and ratios of print speeds according to an example in order to notify the user of the media processing system. An example meter window 331 is shown having a number of pointer lines 332, 333 and a scale of percentages from 0 to 100 for indicating print speeds in relation to the maximum print speed which corresponds to a pointer line 334 towards the 100 percentage indication in the meter window 331.
The controller determines, according to an original set of the specified print job settings and according to the print order determined by the print job queue, an achievable average print speed of the media processing system for printing the print jobs 1 - 17 in the print queue. The ratio of the achievable average print speed and the maximum print speed is indicated by a dashed pointer line 333. The achievable average print speed is lower than the maximum print speed due to the original set of the specified print job settings and to the print order. In this example in Fig. 3 the ratio of the achievable average print speed and the maximum print speed - shown as a percentage - is approximately 75 %. This may be caused by the fact that print jobs 12 - 15 are printed on coated material instead of plain paper leading to a lower achievable average print speed than the maximum print speed.
After printing of the print jobs 1 - 17 in the print queue, the controller establishes the realised average print speed of the media processing system of printing the print jobs 1 - 17 in the print queue. The ratio of the realised average print speed and the maximum print speed is indicated by a bold pointer line 332. The realised average print speed is lower than the maximum print speed and lower than the achievable average print speed. In this example in Fig. 3 the ratio of the realised average print speed and the maximum print speed - shown as a percentage - is approximately 60 %.
The achievable average print speed and the realised average print speed are simultaneously displayed in the meter window 331. By doing so, the user can see in a glance that improvement of the realised average print speed is possible in the future.

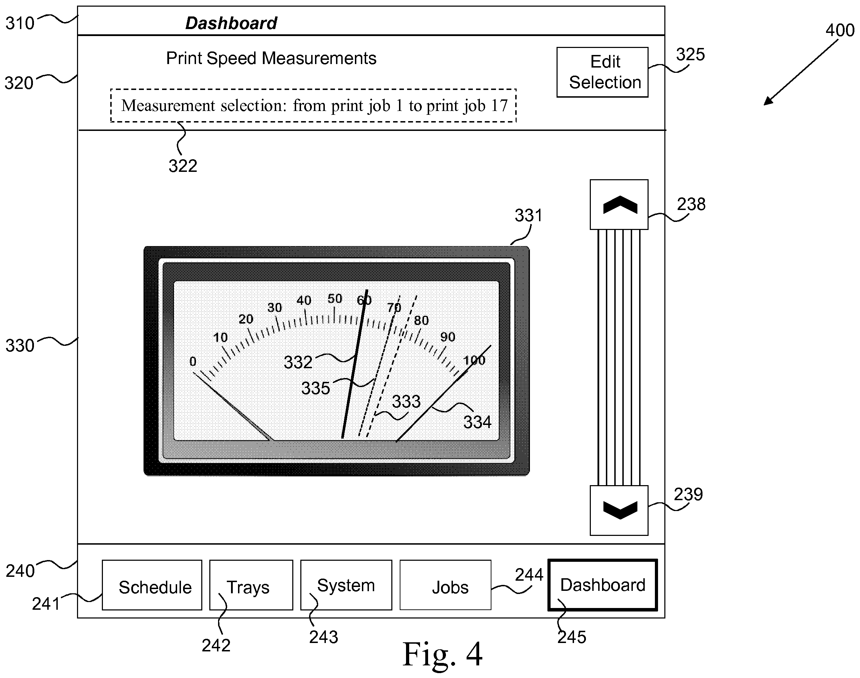

Fig. 4 shows a further example of the meter window 331. The controller is configured to accept a threshold print speed value being intended to be compared by the controller with the value of the realised print speed. When the threshold print speed value has been compared with the realised average print speed value, an outcome of the comparison may be displayed in the meter window 331.
For example, the meter window 331 in Fig. 4 displays a ratio - in a percentage - of the threshold print speed value and the maximum print speed value as a dotted pointer line 335. Instead of or additionally to the dotted pointer line 335, a characteristic of the bold pointer line 332 representing the realised average print speed may be changed. For example, if the bold pointer line 332 indicates a lower percentage than the dotted pointer line 335 would or does indicate, the bold pointer line 332 may be changed into a red coloured pointer line. For example, if the bold pointer line 332 indicates a percentage higher than or equal to percentage indicated by the dotted pointer line 335, the bold pointer line 332 may be changed into a green coloured pointer line.
In Fig. 4 the threshold print speed value percentage indicated by the dotted pointer line 335 is higher than the realised average print speed value indicated by the bold pointer line 332, so the bold pointer line 332 would be red coloured.

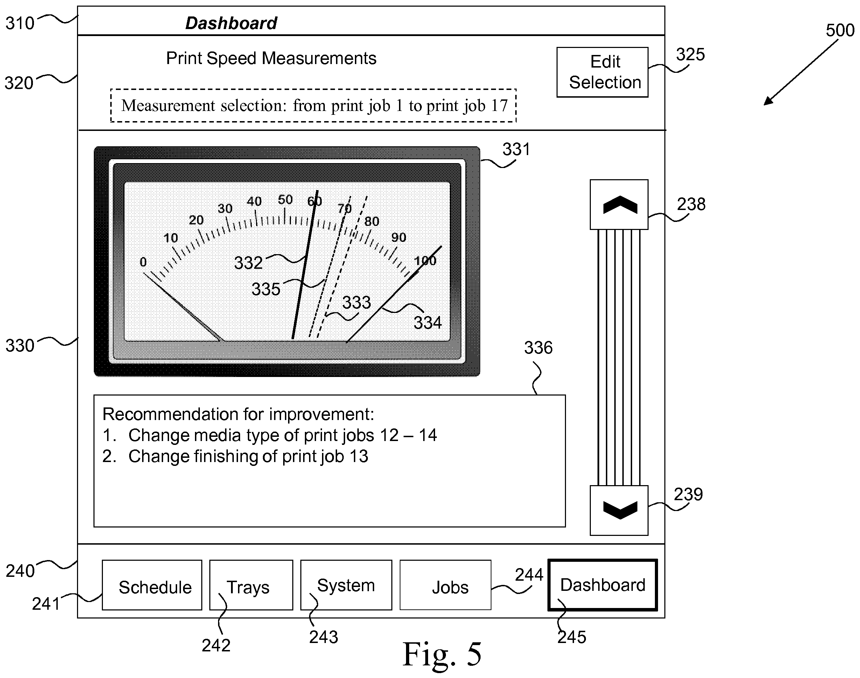

Fig. 5 shows an embodiment of the dashboard section 330. FIG. 5 is a schematic view of a user interface window 500 showing a notification for improving the realised average print speed according to the present invention. The user interface window 500 may be reached by touching or clicking on the meter window 331 in Fig. 3 or Fig. 4.
When the value of the realised average print speed indicated by the bold pointer line 332 is lower than the threshold print speed value indicated by the dotted pointer line 335, a digital suggestion item 336 is displayed in the dashboard section 330 comprising at least one suggestion how the realized average print speed for the print jobs 1 - 17 could have been improved. The suggestion may include a reason why the print jobs 1 - 17 were printed at this realised average print speed. The suggestion may then be used to optimize in future print runs. The digital suggestion item 336 may also be displayed during the printing of the print jobs 1 - 17 in order to cope with a too low realised average print speed at once.

According to the embodiment a user operable element like a button is added near each suggestion on user interface window 500 (not shown). When the user operable element is activated, the corresponding suggestion is automatically carried out by the controller 18.
The at least one suggestion may be based on another set of print job settings for the print jobs 1 - 17. Such other set of print job settings is deviating from the original set and is also influencing the average print speed of the media processing system when the print jobs 1 - 17 would have been printed according to the other set. More than one other set may be proposed by means of the digital suggestion item 336. For example, a finishing setting for a print job like stapling, binding or punching may be changed into no finishing setting for the print job. For example, use of a heavy media which leads to a lower print speed may be replaced by a lighter media, etc. By using the user operable button 225 on the user interface window 200 in Fig. 2, the print job properties of the appropriate print jobs which are selected in the print job queue section 230 in Fig. 2 may be changed in order to comply with the suggestions in the digital suggestion item 336.
The digital suggestion item 336 may display a digital representation of the other set of print job settings. According to the embodiment a user operable element like a button may be added near the digital representation of the other set of print job settings (not shown). When the user operable element is activated, the other set of print job settings is automatically carried out by the controller 18.
Another suggestion for improvement may be established by the controller when the print order of the print jobs 1 - 17 would be changed. According to another specific print order which differs from the print order of the print jobs 1 - 17 in the print job queue and influences the average print speed of the media processing system when the print jobs 1 - 17 would be printed according to that specific order, the realised average print speed may improve, may even be larger than the threshold print speed value and may approach the achievable average print speed.
The digital suggestion item 336 may display a digital representation of the specific print order. According to the embodiment a user operable element like a button may be added near the digital representation of the specific print order (not shown). When the user operable element is activated, a change of the print order according to the specific print order is automatically carried out by the controller 18.
According to a preferred embodiment one of the suggested improvements displayed in the digital suggestion item 336 corresponds to the achievable average print speed indicated by the dashed pointer line 333 in the meter window 331.

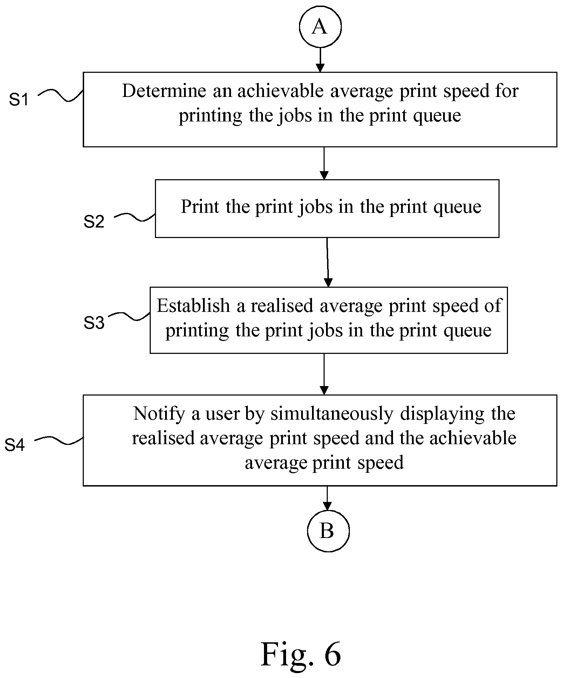

FIG. 6 is a flow diagram of a method according to an example. The method starts in a start point A leading to a first step S1.

In the first step S1 an achievable average print speed of the media processing system for printing the print jobs in the print queue is determined by the controller. For said determination the original set of the specified print job settings and the print order determined by the print job queue are taken into account. The achievable average print speed is lower than the maximum print speed due to the original set of the specified print job settings and due to the print order.
In a second step S2 the print jobs in the print queue are printed by means of the print engine of the media processing system.

In a third step S3, which is preferably parallel in time to the second step S2 - or after printing of the print jobs in the print queue is completed according to the second step S2 (not shown) - , a realised average print speed of the media processing system of the printing of the print jobs is established by the controller. A number of printed sheets of the print jobs may be detected and registered by the controller. A time amount needed to print said number of printed sheets by the print engine may be registered by the controller. The realised average print speed is calculated by dividing the registered number of printed sheets by the registered amount of time needed to print the same number of sheets by the print engine.

In a fourth step S4 a user of the media processing system is notified by simultaneously displaying on the user interface screen a value of the realised average print speed established in the third step S3 and a value of the achievable average print speed determined in the first step S1. The user immediately can see whether or not he can improve the realised average print speed. The larger the difference is between the achievable average print speed and the realised average print speed as shown in the user interface screen, the larger the improvement can be. If there is a difference, the user immediately can see how large the improvement will be. If the realised average print speed is larger than or equal to the achievable average print speed, the user knows that he does not have to make an effort to improve the realised average print speed for the print jobs in future cases. According to a further example multiple alternative achievable print speeds are displayed with different sets of print job properties. This is advantageous since it gives more insight in causes of the realised average print speed being below the achievable average print speed.
The method ends in an end point B.
Before the first step S1 at least one finite time interval is set for which the realised average print speed is intended to be established and for which the achievable average print speed is intended to be determined. The finite time interval may be automatically set by the controller based on a predetermined system setting. The finite time interval may be set by the controller based on a system setting settable by means of the user operable button 243 shown in Fig. 4. The finite time interval may be set by user input by means of the user operable button 325 in the user filter section 320 shown in Fig. 3. The finite time interval may also be set based on a specific number of print jobs. The finite time interval may be set equal to a print job duration of a print job.
Accordingly, in the fourth step S4 the value of the established realised average print speed and the value of the determined achievable print speed are displayed on the user interface screen for each set finite time interval.

According to a further example the method comprises the steps of accepting a threshold print speed value being intended to be compared by the controller with the value of the realised print speed and displaying a digital representation of an outcome of the comparison near the displayed value of the realised average print speed on the user interface screen as shown in Fig. 4.

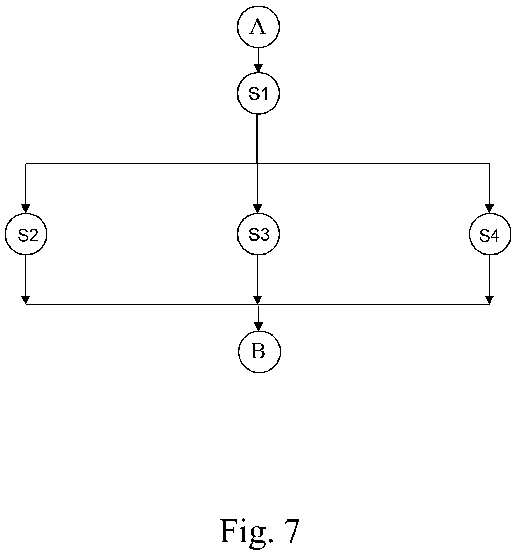

FIG. 7 is a flow diagram of a method according to another example. The steps S1 - S4 refer to the steps S1 - S4 in FIG. 6. The steps S2, S3 and S4 in FIG. 7 are carried out in parallel and concurrently. While printing the print jobs the realised average print speed is calculated and displayed. The realised average print speed may be calculated from the start of the selected finite time interval to the actual moment in time ("now") resulting in a current value for the realised average print speed.

The skilled person will recognise that other embodiments with respect to the media processing system and corresponding method are possible within the scope of the appended claims.

## Claims

1. A media processing system (100) comprising a print engine (3) having a maximum print speed, a print job queue of print jobs to be processed according to specified print job settings per print job and according to a print order determined by the print job queue, a print controller (18) to control the processing of the print jobs, and a user interface screen (500), wherein the print controller is configured
a) to determine, according to an original set of the specified print job settings and according to the print order determined by the print job queue, an achievable average print speed of the media processing system for printing the print jobs in the print queue, the achievable average print speed being lower than the maximum print speed due to the original set of the specified print job settings and to the print order,
b) to establish a realised average print speed of the media processing system of printing the print jobs in the print queue, and
c) to notify a user of the media processing system by simultaneously displaying on the user interface screen a value (332) of the realised average print speed established in step b) and a value (333) of the achievable average print speed determined in step a),
d) to execute the steps b) and c) concurrently with a step of printing the print jobs in the print queue by the print engine,
e) to accept a threshold print speed value being intended to be compared by the controller with the value of the realised print speed and the user interface screen is configured to display a digital representation of an outcome of the comparison near the displayed value of the realised average print speed on the user interface screen, and
wherein the user interface screen is configured to display, when the value of the realised average print speed is lower than the threshold print speed value, a digital suggestion (336) of how to improve the realized average print speed for the print jobs, and to display near the digital suggestion item a user operable item which upon activation results in the controller to carry out the suggestion.

2. The media processing system according to claim 1, wherein the print controller is configured to set at least one finite time interval during which the realised average print speed is established and for which the achievable average print speed is determined and the controller is configured to display on the user interface screen for each set finite time interval a value of the established realised average print speed and a value of the determined achievable print speed.

3. The media processing system according to claim 1, wherein the digital suggestion item is according to at least one other set of print job settings, each other set of the at least one other set of print job settings being deviating from the original set and from each other and influencing the average print speed of the media processing system upon printing of the print jobs in the print queue according to the other set.

4. The media processing system according to claim 3, wherein the user interface screen is configured to display a digital representation of the at least one other set of print job settings.

5. The media processing system according to claim 1, wherein the digital suggestion item is according to a specific print order being other than the print order of the print jobs in the print job queue and influencing the average print speed of the media processing system upon printing of the print jobs in the print queue according to the specific order.

6. The media processing system according to claim 5, wherein the user interface screen is configured to display a digital representation of the specific print order.

7. A method for a media processing system comprising a print engine having a maximum print speed, a print job queue of print jobs to be processed according to specified print job settings per print job and according to a print order determined by the print job queue, a print controller to control the processing of the print jobs, and a user interface screen,
wherein the method comprises the steps of
a) determining, according to an original set of the specified print job settings and according to the print order determined by the print job queue, an achievable average print speed of the media processing system for printing the print jobs in the print queue, the achievable average print speed being lower than the maximum print speed due to the original set of the specified print job settings and to the print order,
b) establishing a realised average print speed of the media processing system of printing the print jobs in the print queue, and
c) notifying a user of the media processing system by simultaneously displaying on the user interface screen a value of the realised average print speed established in step b) and a value of the achievable average print speed determined in step a),
d) executing the steps b) and c) concurrently with a step of printing the print jobs in the print queue by the print engine,
e) accepting a threshold print speed value being intended to be compared by the controller with the value of the realised print speed and the user interface screen is configured to display a digital representation of an outcome of the comparison near the displayed value of the realised average print speed on the user interface screen,
f) displaying at the user interface, when the value of the realised average print speed is lower than the threshold print speed value, a digital suggestion item of how to improve the realized average print speed for the print jobs, and
g) displaying at the user interface near the digital suggestion item a user operable item which upon activation results in the controller to carry out the suggestion.

8. The method according to claim 7, wherein the method comprises the steps of setting at least one finite time interval during which the realised average print speed is established and for which the achievable average print speed is determined and displaying on the user interface screen for each set finite time interval a value of the established realised average print speed and a value of the determined achievable print speed.

9. The method according to any of the claims 7 - 8, wherein the method comprises the steps of accepting a threshold print speed value being intended to be compared by the controller with the value of the realised print speed and displaying a digital representation of an outcome of the comparison near the displayed value of the realised average print speed on the user interface screen.

10. A software product comprising program code on a non-transitory computer-readable medium, wherein said program code, when loaded into a computer that is connected to a media processing system causes the computer to perform the method according to any of the claims 7 - 9.

## Patentansprüche

1. Medienverarbeitungssystem (100) mit einem Druckgerät (3), das eine maximale Druckgeschwindigkeit hat, einer Druckauftragsschlange von Druckaufträgen, die gemäß spezifizierten Druckauftragseinstellungen je Druckauftrag und gemäß einer durch die Druckauftragsschlange bestimmten Reihenfolge zu drucken sind, einer Druckersteuerung (18) zur Steuerung der Verarbeitung der Druckaufträge, und einem Bildschirm einer Benutzerschnittstelle (500), bei dem die Druckersteuerung dazu konfiguriert ist:
a) anhand eines ursprünglichen Satzes der spezifizierten Druckauftragseinstellungen und anhand der durch die Druckauftragsschlange bestimmten Druckreihenfolge eine erreichbare mittlere Druckgeschwindigkeit des Medienverarbeitungssystems beim Drucken der Druckaufträge in der Druckerschlange zu bestimmen, wobei die erreichbare mittlere Druckgeschwindigkeit infolge des ursprünglichen Satzes der spezifizierten Druckauftragseinstellungen und der Druckreihenfolge kleiner ist als die maximale Druckgeschwindigkeit,
b) eine realisierte mittlere Druckgeschwindigkeit des Medienverarbeitungssystems beim Drucken der Druckaufträge in der Druckerschlange festzustellen, und
c) einen Benutzer des Medienverarbeitungssystems zu informieren durch gleichzeitiges Anzeigen eines Wertes (332) der in Schritt b) festgestellten realisierten mittleren Druckgeschwindigkeit und eines Wertes (333) der in Schritt a) bestimmten erreichbaren mittleren Druckgeschwindigkeit auf dem Bildschirm der Benutzerschnittstelle,
d) die Schritte b) und c) gleichzeitig mit einem Schritt des Druckens der Druckaufträge in der Druckerschlange durch das Druckgerät auszuführen.
e) eine Schwellendruckgeschwindigkeit anzunehmen, die dazu vorgesehen ist, durch die Steuerung mit dem Wert der realisierten Druckgeschwindigkeit verglichen zu werden, und der Bildschirm der Benutzerschnittstelle dazu konfiguriert ist, eine digitale Wiedergabe eines Ergebnisses des Vergleichs in der Nähe des angezeigten Wertes der realisierten mittleren Druckgeschwindigkeit auf dem Bildschirm der Benutzerschnittstelle anzuzeigen, und
wobei der Bildschirm der Benutzerschnittstelle dazu konfiguriert ist, wenn der Wert der realisierten mittleren Druckgeschwindigkeit kleiner ist als der Wert der Schwellendruckgeschwindigkeit, einen digitalen Vorschlag (336) anzuzeigen, wie die realisierte Druckgeschwindigkeit für die Druckaufträge verbessert werden kann, und in der Nähe des digitalen Vorschlags-Anzeigeobjekts ein vom Benutzer betätigbares Objekt anzuzeigen, das bei Betätigung dazu führt, dass die Steuerung den Vorschlag ausführt.

2. Medienverarbeitungssystem nach Anspruch 1, bei dem die Druckersteuerung dazu konfiguriert ist, wenigstens ein endliches Zeitintervall festzulegen, während dessen die realisierte mittlere Druckgeschwindigkeit festgestellt wird und für welches die erreichbare mittlere Druckgeschwindigkeit bestimmt wurde, und die Steuerung dazu konfiguriert ist, auf dem Bildschirm der Benutzerschnittstelle für jedes festgelegte endliche Zeitintervall einen Wert der festgestellten realisierten mittleren Druckgeschwindigkeit und einen Wert der bestimmten erreichbaren Druckgeschwindigkeit anzuzeigen.

3. Medienverarbeitungssystem nach Anspruch 1, bei dem das digitale Vorschlags-Anzeigeobjekt sich auf wenigstens einen anderen Satz von Druckauftragseinstellungen bezieht, wobei jeder andere Satz unter den wenigstens einen anderen Sätzen von Druckauftragseinstellungen von dem ursprünglichen Satz und voneinander abweicht und die mittlere Druckgeschwindigkeit des Medienverarbeitungssystems beim Drucken der Druckaufträge in der Druckerschlange gemäß dem anderen Satz beeinflusst.

4. Medienverarbeitungssystem nach Anspruch 3, bei dem der Bildschirm der Benutzerschnittstelle dazu konfiguriert ist, eine digitale Wiedergabe des wenigstens einen anderen Satzes von Druckauftragseinstellungen anzuzeigen.

5. Medienverarbeitungssystem nach Anspruch 1, bei dem das digitale Vorschlags-Anzeigeobjekt sich auf eine spezifische Druckreihenfolge bezieht, die anders ist als die Druckreihenfolge der Druckaufträge in der Druckerschlange und die mittlere Druckgeschwindigkeit des Medienverarbeitungssystems beim Drucken der Druckaufträge in der Druckerschlange gemäß der spezifischen Reihenfolge beeinflusst.

6. Medienverarbeitungssystem nach Anspruch 5, bei dem der Bildschirm der Benutzerschnittstelle dazu konfiguriert ist, eine digitale Wiedergabe der spezifischen Druckreihenfolge anzuzeigen.

7. Verfahren für ein Medienverarbeitungssystem, das ein Druckgerät, das eine maximale Druckgeschwindigkeit hat, eine Druckauftragsschlange von Druckaufträgen, die gemäß spezifizierten Druckauftragseinstellungen je Druckauftrag und gemäß einer Druckreihenfolge zu drucken sind, die durch die Druckauftragsschlange bestimmt wird, eine Druckersteuerung zur Steuerung der Verarbeitung der Druckaufträge, und einen Bildschirm einer Benutzerschnittstelle aufweist,
welches Verfahren die folgenden Schritte aufweist:
a) bestimmen einer erreichbaren mittlere Druckgeschwindigkeit des Medienverarbeitungssystems beim Drucken der Druckaufträge in der Druckerschlange anhand eines ursprünglichen Satzes der spezifizierten Druckauftragseinstellungen und anhand der durch die Druckauftragsschlange bestimmten Druckreihenfolge, wobei die erreichbare mittlere Druckgeschwindigkeit infolge des ursprünglichen Satzes der spezifizierten Druckauftragseinstellungen und der Druckreihenfolge kleiner ist als die maximale Druckgeschwindigkeit,
b) feststellen einer realisierte mittleren Druckgeschwindigkeit des Medienverarbeitungssystems beim Drucken der Druckaufträge in der Druckerschlange, und
c) informieren eines Benutzers des Medienverarbeitungssystems durch gleichzeitiges Anzeigen eines Wertes (332) der in Schritt b) festgestellten realisierten mittleren Druckgeschwindigkeit und eines Wertes (333) der in Schritt a) bestimmten erreichbaren mittleren Druckgeschwindigkeit auf dem Bildschirm der Benutzerschnittstelle,
d) ausführen der Schritte b) und c) gleichzeitig mit einem Schritt des Druckens der Druckaufträge in der Druckerschlange durch das Druckgerät.
e) annehmen einer Schwellendruckgeschwindigkeit, die dazu vorgesehen ist, durch die Steuerung mit dem Wert der realisierten Druckgeschwindigkeit verglichen zu werden, und der Bildschirm der Benutzerschnittstelle dazu konfiguriert ist, eine digitale Wiedergabe eines Ergebnisses des Vergleichs in der Nähe des angezeigten Wertes der realisierten mittleren Druckgeschwindigkeit auf dem Bildschirm der Benutzerschnittstelle anzuzeigen,
f) wenn der Wert der realisierten mittleren Druckgeschwindigkeit kleiner ist als der Wert der Schwellendruckgeschwindigkeit, anzeigen, auf der Benutzerschnittstelle, eines digitalen Vorschlags-Anzeigeobjekts, wie die realisierte mittlere Druckgeschwindigkeit für die Druckaufträge verbessert werden kann, und
g) anzeigen, auf der Benutzerschnittstelle in der Nähe des digitalen Vorschlags-Anzeigeobjekts, eines von einem Benutzer betätigbaren Objektes, das bei Betätigung dazu führt, dass die Steuerung den Vorschlag ausführt.

8. Verfahren nach Anspruch 7, bei dem das Verfahren die Schritte der Festlegung wenigstens eines endlichen Zeitintervalls, während dessen die realisierte mittlere Druckgeschwindigkeit festgestellt wird und für welches die erreichbare mittlere Druckgeschwindigkeit bestimmt wird, und der Anzeige, auf dem Bildschirm der Benutzerschnittstelle, eines Wertes der festgestellten realisierten mittleren Druckgeschwindigkeit und eines Wertes der bestimmten erreichbaren Druckgeschwindigkeit für jedes festgelegte endliche Zeitintervall einschließt.

9. Verfahren nach einem der Ansprüche 7 bis 8, wobei das Verfahren die Schritte des Annehmens einer Schwellendruckgeschwindigkeit, die dazu vorgesehen ist, durch die Steuerung mit dem Wert der realisierten Druckgeschwindigkeit verglichen zu werden, und des Anzeigens einer digitalen Wiedergabe eines Ergebnisses des Vergleichs in der Nähe des angezeigten Wertes der realisierten mittleren Druckgeschwindigkeit auf dem Bildschirm der Benutzerschnittstelle einschließt.

10. Softwareprodukt mit Programmcode auf einem nichtflüchtigen computerlesbaren Medium, wobei dieser Programmcode, wenn er in einen Computer geladen ist, der an ein Medienverarbeitungssystem angeschlossen ist, den Computer veranlasst, das Verfahren nach einem der Ansprüche 7 bis 9 auszuführen.

## Revendications

1. Système de traitement de supports (100) comprenant un moteur d'impression (3) présentant une vitesse d'impression maximale, une file de travaux d'impression de travaux d'impression devant être traités selon des réglages de travaux d'impression spécifiés par travail d'impression et selon un ordre d'impression déterminé par la file de travaux d'impression, un dispositif de commande d'impression (18) pour commander le traitement des travaux d'impression, et un écran d'interface utilisateur (500),
dans lequel le dispositif de commande d'impression est configuré
a) pour déterminer, selon un ensemble original des réglages de travaux d'impression spécifiés et selon l'ordre d'impression déterminé par la file de travaux d'impression, une vitesse d'impression moyenne atteignable du système de traitement de supports pour imprimer les travaux d'impression dans la file d'impression, la vitesse d'impression moyenne atteignable étant inférieure à la vitesse d'impression maximale en raison de l'ensemble original des réglables de travaux d'impression spécifiés et de l'ordre d'impression,
b) pour établir une vitesse d'impression moyenne réalisée du système de traitement de supports pour imprimer les travaux d'impression dans la file d'impression, et
c) pour notifier un utilisateur du système de traitement de supports en affichant simultanément sur l'écran d'interface utilisateur une valeur (332) de la vitesse d'impression moyenne réalisée établie à l'étape b) et une valeur (333) de la vitesse d'impression moyenne atteignable déterminée à l'étape a),
d) pour exécuter les étapes b) et c) en même temps qu'une étape d'impression des travaux d'impression dans la file d'impression par le moteur d'impression,
e) pour accepter une valeur seuil de vitesse d'impression étant prévue pour être comparée par le dispositif de commande avec la valeur de la vitesse d'impression réalisée et l'écran d'interface utilisateur est configuré pour afficher une représentation numérique d'un résultat de la comparaison près de la valeur affichée de la vitesse d'impression moyenne réalisée sur l'écran d'interface utilisateur, et
dans lequel l'écran d'interface utilisateur est configuré pour afficher, lorsque la valeur de la vitesse d'impression moyenne réalisée est inférieure à la valeur seuil de vitesse d'impression, une suggestion numérique (336) de la manière d'améliorer la vitesse d'impression moyenne réalisée pour les travaux d'impression, et pour afficher, près de l'élément de suggestion numérique, un élément pouvant être actionné par l'utilisateur qui, lors de l'activation, amène le dispositif de commande à effectuer la suggestion.

2. Système de traitement de supports selon la revendication 1, dans lequel le dispositif de commande d'impression est configuré pour définir au moins un intervalle de temps limité durant lequel la vitesse d'impression moyenne réalisée est établie et pour lequel la vitesse d'impression moyenne atteignable est déterminée et le dispositif de commande est configuré pour afficher sur l'écran d'interface utilisateur, pour chaque intervalle de temps limité défini, une valeur de la vitesse d'impression moyenne réalisée établie et une valeur de la vitesse d'impression atteignable déterminée.

3. Système de traitement de supports selon la revendication 1, dans lequel l'élément de suggestion numérique est selon au moins un autre ensemble de réglages de travaux d'impression, chaque autre ensemble de l'au moins un autre ensemble de réglages de travaux d'impression s'écartant de l'ensemble original et les uns des autres et influençant la vitesse d'impression moyenne du système de traitement de supports lors de l'impression des travaux d'impression dans la file d'impression selon l'autre ensemble.

4. Système de traitement de supports selon la revendication 3, dans lequel l'écran d'interface utilisateur est configuré pour afficher une représentation numérique de l'au moins un autre ensemble de réglages de travaux d'impression.

5. Système de traitement de supports selon la revendication 1, dans lequel l'élément de suggestion numérique est selon un ordre d'impression spécifique étant autre que l'ordre d'impression des travaux d'impression dans la file de travaux d'impression et influençant la vitesse d'impression moyenne du système de traitement de supports lors de l'impression des travaux d'impression dans la file d'impression selon l'ordre spécifique.

6. Système de traitement de supports selon la revendication 5, dans lequel l'écran d'interface utilisateur est configuré pour afficher une représentation numérique de l'ordre d'impression spécifique.

7. Procédé pour un système de traitement de supports comprenant un moteur d'impression présentant une vitesse d'impression maximale, une file de travaux d'impression de travaux d'impression devant être traités selon des réglages de travaux d'impression spécifiés par travail d'impression et selon un ordre d'impression déterminé par la file de travaux d'impression, un dispositif de commande d'impression pour commander le traitement des travaux d'impression, et un écran d'interface utilisateur,
dans lequel le procédé comprend les étapes consistant à
a) déterminer, selon un ensemble original des réglages de travaux d'impression spécifiés et selon l'ordre d'impression déterminé par la file de travaux d'impression, une vitesse d'impression moyenne atteignable du système de traitement de supports pour imprimer les travaux d'impression dans la file d'impression, la vitesse d'impression moyenne atteignable étant inférieure à la vitesse d'impression maximale en raison de l'ensemble original des réglables de travaux d'impression spécifiés et de l'ordre d'impression,
b) établir une vitesse d'impression moyenne réalisée du système de traitement de supports pour imprimer les travaux d'impression dans la file d'impression, et
c) notifier un utilisateur du système de traitement de supports en affichant simultanément sur l'écran d'interface utilisateur une valeur de la vitesse d'impression moyenne réalisée établie à l'étape b) et une valeur de la vitesse d'impression moyenne atteignable déterminée à l'étape a),
d) exécuter les étapes b) et c) en même temps qu'une étape d'impression des travaux d'impression dans la file d'impression par le moteur d'impression,
e) accepter une valeur seuil de vitesse d'impression étant prévue pour être comparée par le dispositif de commande avec la valeur de la vitesse d'impression réalisée et l'écran d'interface utilisateur est configuré pour afficher une représentation numérique d'un résultat de la comparaison près de la valeur affichée de la vitesse d'impression moyenne réalisée sur l'écran d'interface utilisateur,
f) afficher, au niveau de l'interface utilisateur, lorsque la valeur de la vitesse d'impression moyenne réalisée est inférieure à la valeur seuil de vitesse d'impression, un élément de suggestion numérique de la manière d'améliorer la vitesse d'impression moyenne réalisée pour les travaux d'impression, et
g) afficher, au niveau de l'interface utilisateur, près de l'élément de suggestion numérique, un élément pouvant être actionné par l'utilisateur qui, lors de l'activation, amène le dispositif de commande à effectuer la suggestion.

8. Procédé selon la revendication 7, dans lequel le procédé comprend les étapes consistant à définir au moins un intervalle de temps limité durant lequel la vitesse d'impression moyenne réalisée est établie et pour lequel la vitesse d'impression moyenne atteignable est déterminée et afficher sur l'écran d'interface utilisateur, pour chaque intervalle de temps limité défini, une valeur de la vitesse d'impression moyenne réalisée établie et une valeur de la vitesse d'impression atteignable déterminée.

9. Procédé selon l'une quelconque des revendications 7 à 8, dans lequel le procédé comprend les étapes consistant à accepter une valeur seuil de vitesse d'impression étant prévue pour être comparée par le dispositif de commande avec la valeur de la vitesse d'impression réalisée et afficher une représentation numérique d'un résultat de la comparaison près de la valeur affichée de la vitesse d'impression moyenne réalisée sur l'écran d'interface utilisateur.

10. Produit de logiciel comprenant un code de programme sur un support non transitoire lisible par ordinateur, dans lequel ledit code de programme, lorsqu'il est chargé dans un ordinateur qui est connecté à un système de traitement de supports, amène l'ordinateur à effectuer le procédé selon l'une quelconque des revendications 7 à 9.
